# EUROPEAN PATENT APPLICATION

(11) **EP 2 428 319 A1**
(43) Date of publication of application: **14.03.2012**
(21) Application number: 11179271.9
(22) Date of filing: 30.08.2011
(51) Int. Cl.: B25B 27/00, B25B 27/02, B25B 27/18

(54) **Apparatus for removing glow plugs from diesel engines**

(30) Priority: 03.09.2010 IT MO20100249
(71) Applicant: GO.VO.NI. S.R.L., 41124 Modena (IT)
(72) Inventor: Verrillo, Antonio, 40017 San Giovanni in Persiceto (BO) (IT); Verrillo, Davide, 40019 Sant'Agata Bolognese (BO) (IT); Mitrati, Marco, 40017 San Giovanni in Persiceto (BO) (IT)
(74) Representative: Modiano, Micaela Nadia

(57) **Abstract**

An apparatus (1) for removing glow plugs from diesel engines comprising means (2) for anchoring to the head of a diesel engine which supports at least one seat in which a corresponding glow plug to be removed is engaged and guiding means (3) for inserting means (4) for the extraction of the glow plug along an intervention direction (D) substantially coaxial to the longitudinal axis of the seat.

The anchoring means (2) and the guiding means (3) are associated with a single rigid support (5), the shape of this support (5) and/or of the guiding means (3) being adapted to define the direction of intervention (D) uniquely.

## Description

The present invention relates to an apparatus for removing glow plugs from diesel engines.

It is known that diesel engines take advantage of the principle of compression of fuel in order to achieve its ignition. However, in order to promote the ignition even when the engine is cold, there are generally glow plugs provided in the head.

These glow plugs are constituted by a threaded body that can be coupled to a corresponding seat formed on the head of the engine and holds an incandescent element powered by the electrical system of the vehicle. One of these is installed in proximity to each one of the injectors of the diesel engine.

The glow plugs start to function before the engine starts and are capable of heating up quickly, so as to promote the spontaneous combustion of the fuel.

Should it be necessary to remove the glow plugs, one has to unscrew them from their seats.

This operation is generally carried out by means of adapted tools of the type of spanners.

However, in the event of breakage or damage of the portion of glow plug with which this tool has to engage, it is necessary to intervene by carrying out a first operation using a utensil for the axial perforation of the end of the glow plug that is accessible from outside of the engine and a second operation involving the insertion, in the hole made in the glow plug, of an extraction utensil provided with a threaded end that engages the aforementioned hole so as to pull the glow plug in the direction of extraction.

In order to facilitate these operations, apparatuses have been developed for supporting utensils, which basically consist in a first plate for being anchored to the head of the engine on which a second plate must be mounted which supports a guiding seat for the insertion of the utensils which must, each time, be aligned with the seat of the glow plug that needs to be worked on.

These apparatuses are not devoid of drawbacks, among which is the fact that before carrying out each operation the technician has to verify the correct positioning of the second plate with respect to the first, in order to ensure the coaxial position of the guiding seat of the utensils and the seat of the glow plug to be extracted.

This operation is quite difficult because the position of the axis of the seat of the glow plug cannot be precisely determined and, therefore, the outcome of the intervention is strongly influenced by the sensitivity and experience of the technician.

Moreover, if it is necessary to remove several glow plugs from the same engine then the technician must, as he or she works, move the plate carrying the guiding seat along the anchoring plate in order to position it at the glow plug on which to perform the extraction.

This aspect evidently involves a lengthening of the time required for the intervention and a complication of the operations required of the technician.

The aim of the present invention is to eliminate the above-mentioned drawbacks in the background art, by providing an apparatus for removing glow plugs from diesel engines that makes it possible to ensure a correct and precise alignment of the direction of intervention with respect to the seat of the glow plug to be removed without requiring the intervention of the technician in this determination, so as to reduce the intervention time and maximize the effectiveness thereof.

Within this aim, an object of the present invention is to ensure that this alignment can be repeated over time.

Another object of the present invention is to make it possible, if necessary, to intervene on a plurality of glow plugs without having to reposition the apparatus or its parts.

Another object of the present invention is to provide a simple structure, that is easy and practical to implement, safe to use and effective in operation, and relatively low-cost.

This aim and these objects are all achieved by the present apparatus for removing glow plugs from diesel engines, comprising means for being anchored to the head of a diesel engine which supports at least one seat in which a corresponding glow plug to be removed is engaged and guiding means for inserting means for the extraction of said glow plug along an intervention direction that is substantially coaxial to the longitudinal axis of said seat, characterized in that said anchoring means and said guiding means are associated with a single rigid support, the shape of said support and/or of said guiding means being adapted to define the direction of intervention uniquely.

Further characteristics and advantages of the present invention will become more apparent from the detailed description of some preferred, but not exclusive, embodiments of an apparatus for removing glow plugs from diesel engines, which are illustrated for the purposes of non-limiting example in the accompanying drawings wherein:
Figure 1 is a perspective schematic view of a first embodiment of the apparatus, according to the invention;
Figure 2 is an exploded perspective schematic view of the apparatus in Figure 1 in which the means of extraction of the glow plug are also shown;
Figure 3 is a schematic side view of a second embodiment of the apparatus, according to the invention, complete with the means of extraction of the glow plug;
Figure 4 is a schematic front view of the apparatus in Figure 3;
Figure 5 is a perspective schematic view of the apparatus in Figure 3;
Figure 6 is an exploded perspective schematic view of the apparatus in Figure 3;
Figure 7 is a schematic side view of a third embodiment of the apparatus, according to the invention, complete with the means of extraction of the glow plug;
Figure 8 is a schematic front view of the apparatus in Figure 7;
Figure 9 is a perspective schematic view of the apparatus in Figure 7;
Figure 10 is an exploded perspective schematic view of the apparatus in Figure 7.

With reference to the figures, the reference numeral 1 generally designates an apparatus for removing glow plugs from diesel engines.

This apparatus 1 makes it possible to work on a diesel engine to extract one or more glow plugs conventionally provided at the injectors, if the technician cannot intervene directly with a spanner or socket wrench to unscrew the glow plug from the corresponding seat, following breakage or damage of the portion of glow plug that engages that tool. The engine and its parts are not shown because they are of the known type.

The apparatus 1 comprises means 2 for being anchored to the head of the engine and means 3 for guiding the insertion of extraction means 4 along an intervention direction D which in use is positioned substantially coaxial, allowing for construction tolerances, with the longitudinal axis of the seat of the glow plug to be removed.

The apparatus 1 comprises a single rigid support 5 with which both the anchoring means 2 and the guiding means 3 are associated. Moreover, the particular shape of the support 5 and/or of the guiding means 3, which is adapted to the geometry of the engine on which the apparatus 1 is intended to be used, makes it possible to define, a priori, the direction of intervention D with respect to the engine once the apparatus 1 is applied thereto uniquely, with no need for the technician to perform any adjustment during use.

The anchoring means 2 can be adapted to engage the head of the diesel engine in corresponding workstations predefined directly by the engine maker or, alternatively, at the receptacle of the injector that corresponds to the glow plug to be extracted, after removal of the injector.

Moreover, the guiding means 3 are provided with at least one through seat 6 for the insertion of the extraction means 4.

In a possible embodiment, the guiding means 3 have a plurality of through seats 6 distributed over the support 5 in a manner corresponding to the distribution of the seats of the glow plugs on the diesel engine, so as to allow the technician to perform the extraction of a plurality of glow plugs with a single positioning of the apparatus 1.

It should be noted that the support 5 can be provided monolithically or it can be provided in kit form and be constituted by a plurality of elements designed to be rigidly connected.

The extractor means 4 are constituted by conventional utensils for performing the operations to extract glow plugs and they comprise, in more detail, a tubular guiding element 7 that can be inserted into a through seat 6 and is provided, at the distal end with respect to the glow plug to be removed, with a portion having a larger diameter for accommodating an internally threaded bearing 8 and a corresponding locking ring 9.

The extractor means 4 comprise, moreover, a perforation bit 10 and an extractor assembly 11 which can be alternatively inserted into the tubular element 7; both are not described in detail because they are of the conventional type, so as to perform the operating steps according to the known method of working.

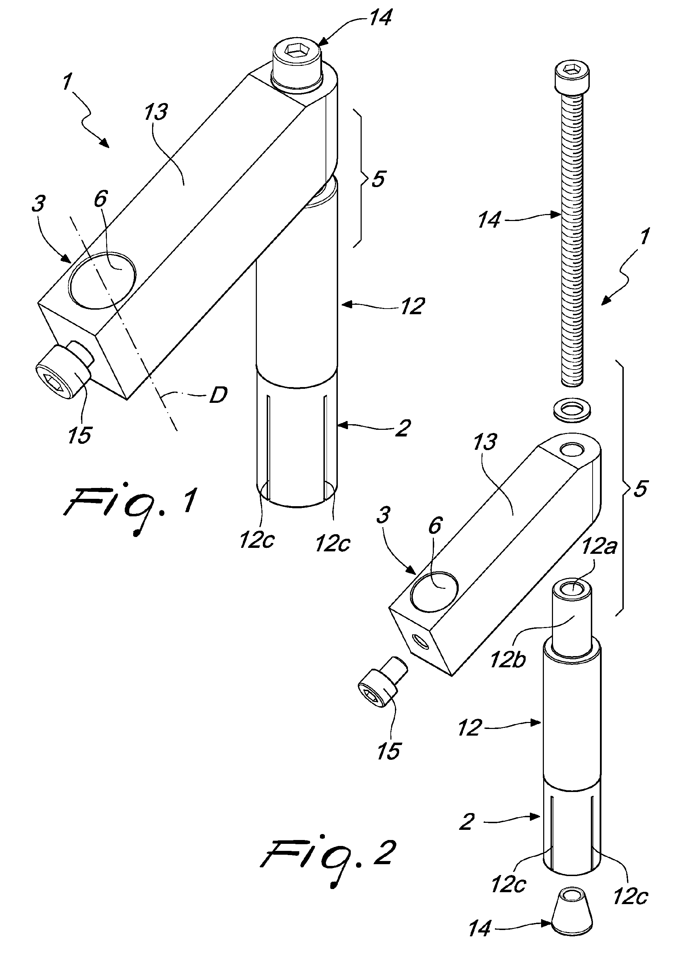

In a first embodiment (Figures 1-2) a version of an apparatus 1 for performing the extraction of a single glow plug is shown which apparatus is provided with anchoring means 2 that can engage the seat of the corresponding injector.

In particular, the support 5 is constituted by a stem 12 provided with a through hole 12a and by a shank 12b at one end for coupling with an element 13 arranged obliquely to the stem, the stem 12 and the element 13 being connected by means of threaded elements 14 and adhesive bonding.

The anchoring means 2 are constituted by the end of the stem 12 which is opposite to the shank 12b, which is provided with notches 12c and can be expanded by fastening of the threaded elements 14 so as to temporarily couple with interference with the seat of the injector.

The guiding means 3 are constituted by a single through seat 6 provided at the end of the element 13 protruding from the stem 12.

Also provided is a threaded element 15 engaged with the element 13 and protruding into the through seat 6 transversely thereto, which makes it possible to lock the extraction means 4 once inserted therein.

The relative inclination between the stem 12 and the element 13 and of the axis of the through seat 6 with respect to the longitudinal axis of the element 13 are dimensioned according to the geometry of the engine on which to perform the intervention, so as to define the correct direction of intervention D.

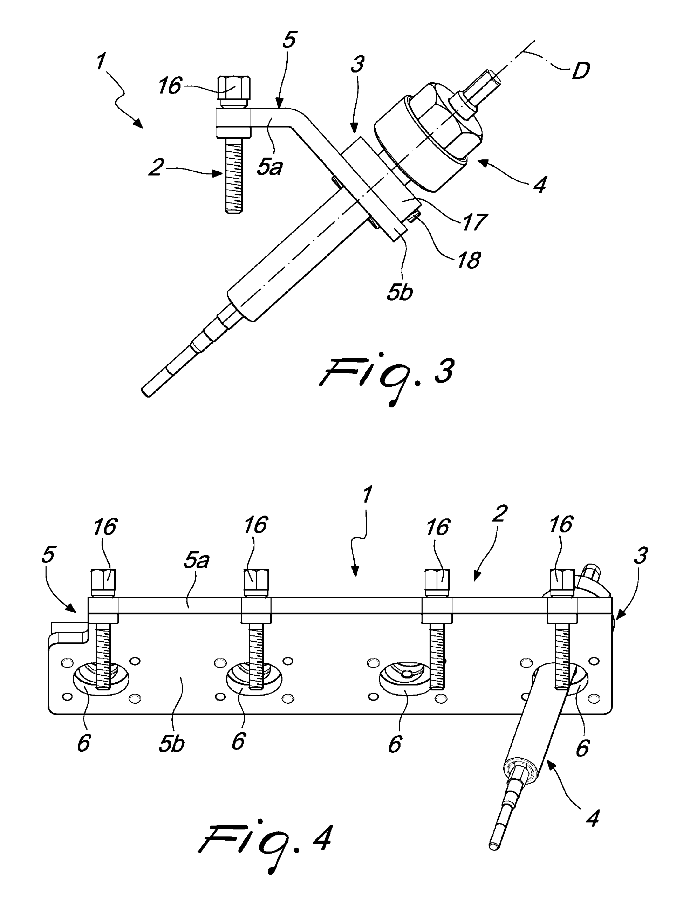

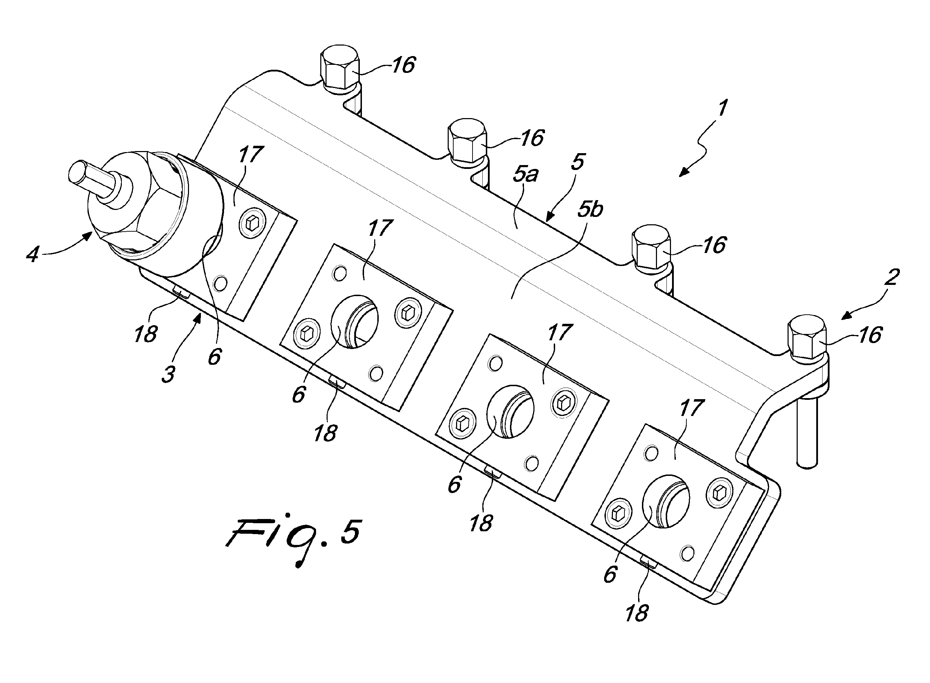

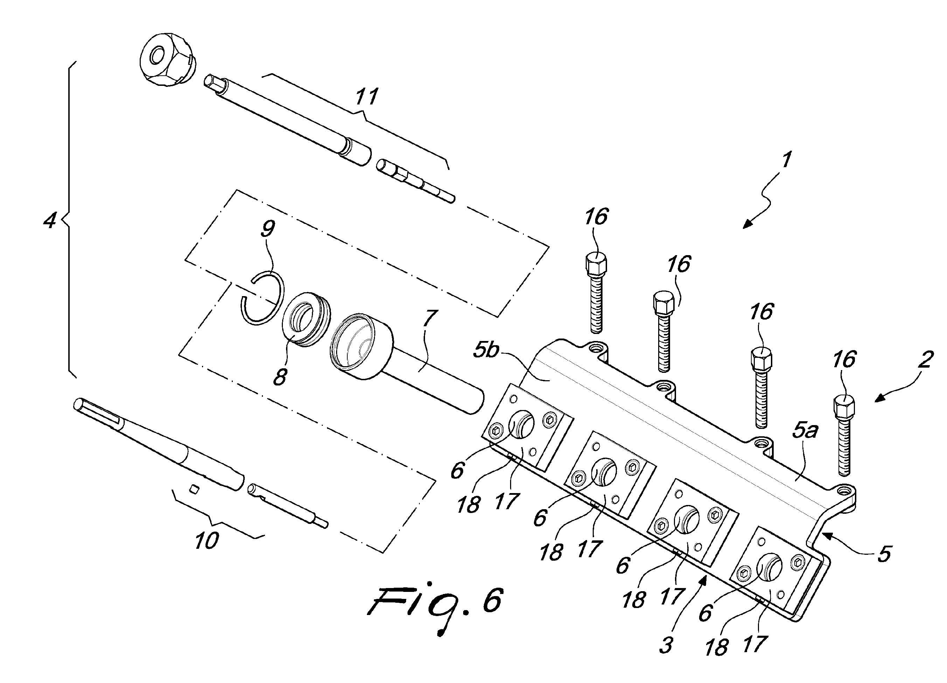

In a second embodiment (Figures 3-6) a version of an apparatus 1 is shown that makes it possible to work on a plurality of glow plugs with a single positioning of the support 5.

The support 5 is constituted by a single contoured elongated plate. This plate has a first portion 5a associated with the anchoring means 2 and a second portion 5b that is inclined with respect to the first one and associated with the guiding means 3.

The anchoring means 2 are provided with a plurality of screws 16, pins or the like, distributed along the first portion 5a and designed to engage corresponding workstations provided on the head of the engine being worked on.

The guiding means 3 are provided with a plurality of through seats 6, at which, on the second portion 5b, respective perforated plates 17 are installed which are provided with corresponding grub screws 18 for locking the extraction means 4.

The relative inclination between the portions 5a and 5b and of the axis of the through seats 6 with respect to the arrangement of the second portion 5b is dimensioned according to the geometry of the engine on which to perform the intervention, so as to define the correct direction of intervention D.

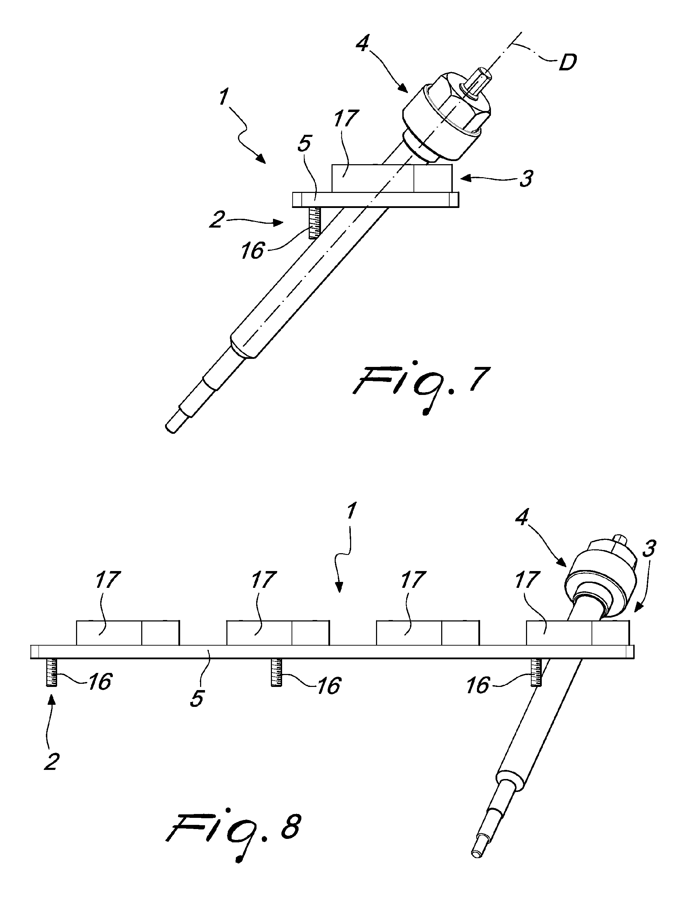

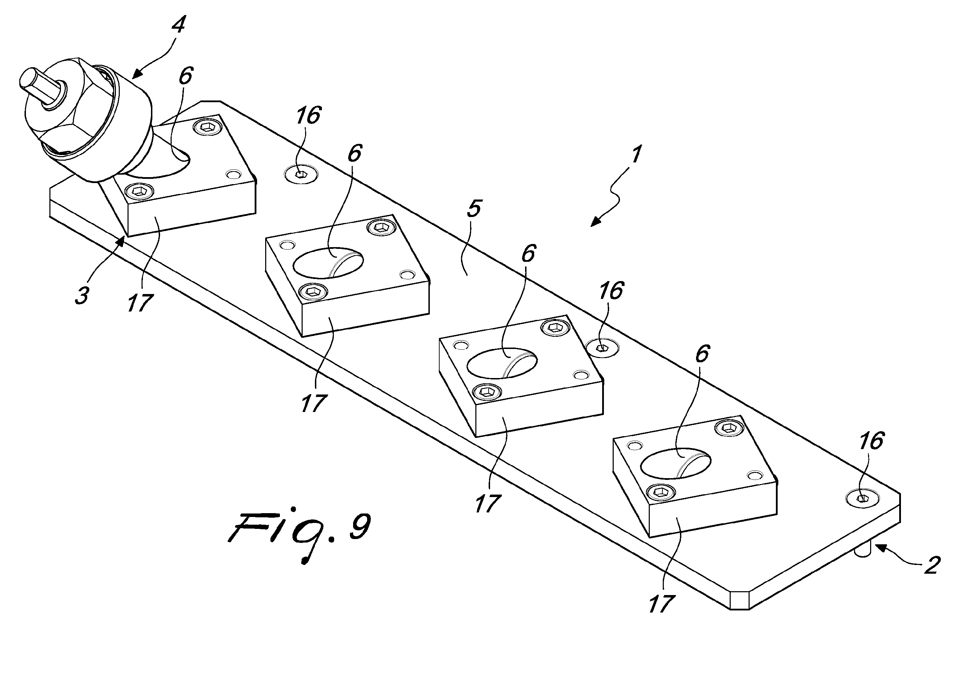

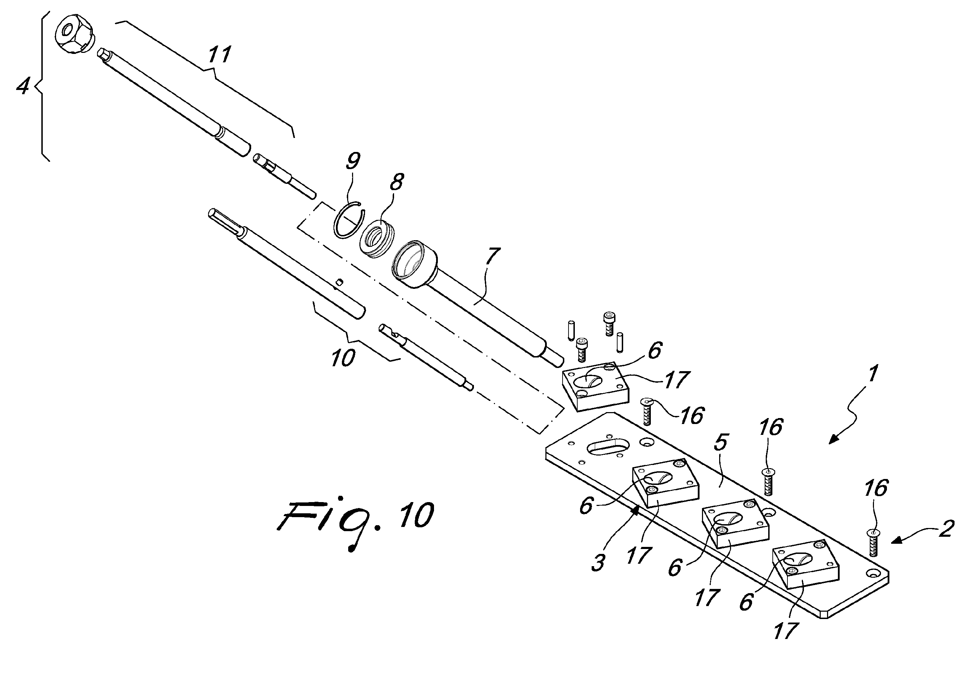

A third embodiment (Figures 7-10) also shows a version of an apparatus 1 that makes it possible to work on a plurality of glow plugs with a single positioning of the support 5.

Other than in the previous case, of which the same reference numerals are used, the support 5 is constituted by a flat plate.

In this case, therefore, only the inclination of the through seats 6 with respect to the arrangement of the plate 5 determines the correct direction of intervention D.

In practice it has been found that the invention as described achieves the intended aim and objects and, in particular, attention is drawn to the fact that the apparatus according to the invention makes it possible to determine with certainty the direction of intervention in the extraction phase, thus simplifying and speeding up the operations required of the technicians responsible.

The invention, thus conceived, is susceptible of numerous modifications and variations, all of which are within the scope of the appended claims.

Moreover, all the details may be substituted by other, technically equivalent elements.

In practice the materials employed, as well as the contingent dimensions and shapes, may be any according to requirements, but without for this reason extending beyond the scope of protection of the following claims.

The disclosures in Italian Patent Application No. MO2010A000249 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus (1) for removing glow plugs from diesel engines, comprising means (2) for anchoring to the head of a diesel engine which supports at least one seat in which a corresponding glow plug to be removed is engaged and guiding means (3) for inserting means (4) for the extraction of said glow plug along an intervention direction (D) that is substantially coaxial with the longitudinal axis of said seat, **characterized in that** said anchoring means (2) and said guiding means (3) are associated with a single rigid support (5), the shape of said support (5) and/or of said guiding means (3) being adapted to define the direction of intervention (D) uniquely.

2. The apparatus (1) according to claim 1, **characterized in that** said guiding means (3) comprise at least one through seat (6) for the insertion of extraction means (4).

3. The apparatus (1) according to claim 2, **characterized in that** said guiding means (3) comprise a plurality of said through seats (6) which are associated with said support (5) and are distributed in a manner that corresponds to the distribution of the seats of the glow plugs on said diesel engine.

4. The apparatus (1) according to one or more of the preceding claims, **characterized in that** said anchoring means (2) are adapted to engage in corresponding locations provided on said diesel engine.

5. The apparatus (1) according to one or more of claims 1-3, **characterized in that** said anchoring means (2) are adapted to engage on said head at the receptacle of the injector that corresponds to the glow plug to be extracted, after removal of said injector.

6. The apparatus (1) according to one or more of the preceding claims, **characterized in that** said support (5) is constituted by a flat plate.

7. The apparatus (1) according to one or more of claims 1-5, **characterized in that** said support (5) comprises a contoured plate, which is provided with a first portion (5a), associated with the anchoring means (2), and with a second portion (5b), which is inclined with respect to the preceding one and associated with the guiding means (3).

8. The apparatus (1) according to one or more of claims 1-5, **characterized in that** said support (5) comprises a plurality of elements (12, 13, 14) which are rigidly interconnected.
